# EUROPÄISCHE PATENTANMELDUNG

(11) **EP 1 671 601 A1**
(43) Veröffentlichungstag der Anmeldung: **21.06.2006**
(21) Anmeldenummer: 05027252.5
(22) Anmeldetag: 14.12.2005
(51) Int. Cl.: A61C 3/025

(54) **Vorrichtung und Verfahren zum Bilden eines Luft-Strahlmittel-Gemischs**

(30) Priorität: 14.12.2004 DE 202004019305 U
(71) Anmelder: BEGO Bremer Goldschlägerei Wilh. Herbst GmbH & Co. KG, 28359 Bremen (DE)
(72) Erfinder: Lambrecht, Heinz, 28201 Bremen (DE)
(74) Vertreter: Eisenführ, Speiser & Partner

(57) **Zusammenfassung**

Die Erfindung betrifft eine Vorrichtung und ein Verfahren zum Bilden eines Gemischs aus Druckluft und einem Strahlmittel (3) zur Bearbeitung von Oberflächen von Gegenständen, insbesondere der Dentaltechnik, durch Bestrahlen der Oberfläche mit dem Luft-Strahlmittel-Gemisch. Die Vorrichtung umfasst einen Behälter (1) für das Strahlmittel (3) und einen an diesem Behälter (1) angeordneten Düsenkörper (2). Der Düsenkörper (2) weist einen Einlasskanal (7, 8) zum Zuführen von Druckluft in den Behälter (1) und einen Auslasskanal (11) zum Abführen des Luft-Strahlmittel-Gemischs aus dem Behälter (1) auf und der Auslasskanal (11) weist in Strömungsrichtung eine Querschnittserweiterung und wenigstens eine im Bereich des sich erweiternden Querschnitts angeordnete Saugdüse (16) auf, welche einen Durchgang vom Behälter (1) zum Auslasskanal (11) bildet. Solche Vorrichtung sind aufwendig herzustellen und die entsprechenden Verfahren entsprechend kostenintensiv. Die Erfindung stellt eine verbesserte, einfachere und robustere Vorrichtung bereit, indem der Einlasskanal (7, 8) und der Auslasskanal (11) den Düsenkörper (2) voneinander getrennt durchlaufen.

## Beschreibung

Die Erfindung betrifft eine Vorrichtung zum Bilden eines Gemischs aus Druckluft und einem Strahlmittel zur Bearbeitung von Oberflächen von Gegenständen, insbesondere der Dentaltechnik, durch Bestrahlen der Oberfläche mit dem Luft-Strahlmittel-Gemisch, wobei die Vorrichtung einen Behälter für das Strahlmittel und einen an diesem Behälter angeordneten Düsenkörper umfasst, der einen Einlasskanal zum Zuführen von Druckluft in den Behälter und einen Auslasskanal zum Abführen des Luft-Strahlmittel-Gemischs aus dem Behälter aufweist, wobei der Auslasskanal in Strömungsrichtung eine Querschnittserweiterung und wenigstens eine im Bereich des sich erweiternden Querschnitts angeordnete Saugdüse aufweist, welche einen Durchgang vom Behälter zum Auslasskanal bildet.

Eine derartige Vorrichtung ist bspw. aus EP 0 314 022 B1 bekannt. Diese bekannte Vorrichtung arbeitet nach dem Venturi-Prinzip. Granulatartiges Strahlmittel wird dazu in den Behälter gegeben. Zum Bilden des Luft-Strahlmittel-Gemischs wird durch den Einlasskanal derart Druckluft in den Behälter geführt, dass das Strahlmittel aufgewirbelt wird. Am Auslasskanal ist ein Steigrohr angeordnet, durch das die in den Behälter zugeführte Druckluft entweichen kann.

Der Auslasskanal ist jedoch bei dieser bekannten Vorrichtung ferner direkt mit dem Einlasskanal verbunden und zwar durch eine Bohrung, die zunächst einen stark verengten Querschnitt gegenüber dem Einlasskanal aufweist, sich dann aber stufenweise zum Auslasskanal hin erweitert. Im Bereich der Querschnittserweiterung ist ein Abzweig vorgesehen, in den ein Dosierrohr eingesteckt ist, das die Saugdüse bildet. Durch diese Anordnung der Saugdüse im Bereich der Querschnittserweiterung des Durchgangs zwischen Einlasskanal und Ausgangskanal entsteht aufgrund des Venturi-Prinzips ein Unterdruck an der Saugdüse, welcher das aufgewirbelte Strahlmittel durch die Saugdüse einsaugt. Der Saugeffekt wird ferner unterstützt durch die über das Steigrohr in den Auslasskanal strömende Druckluft, welche ebenfalls für einen Unterdruck im Bereich der Saugdüse sorgt.

Diese bekannte Vorrichtung gemäß EP 0 314 022 B1 weist eine Vielzahl von Bohrungen mit unterschiedlichen Querschnitten auf. Neben den oben bereits genannten Bohrungen ist ferner eine zweistufige Bohrung zum Einsetzen eines Rohrstücks als Wirbeldüse vorgesehen. In entsprechender Weise ist eine zweistufige Bohrung zum Einsetzen eines Rohrstücks als Saugdüse angebracht. Insgesamt benötigt der in EP 0 314 022 B1 gezeigte Düsenkörper somit wenigstens zehn verschiedene Bohrungen, um die Druckluft in den Strahlmittelbehälter zu führen, das Strahlmittel zu verwirbeln und unter Anwendung des Venturi-Prinzips ein Luft-Strahlmittel-Gemisch zu bilden und wieder herauszuführen.

Die Bereitstellung derart vieler Bohrungen ist jedoch aufwendig und damit kostenintensiv.

Der Erfindung liegt daher das Problem zugrunde, eine weniger aufwendig gestaltete Vorrichtung, insbesondere einen einfacheren Düsenkörper bereitzustellen.

Die Erfindung löst dieses Problem dadurch, dass der Einlasskanal und der Auslasskanal den Düsenkörper getrennt voneinander durchlaufen. Durch diese Trennung des Einlasskanals vom Auslasskanal entfallen zunächst die beiden bei der o.g. bekannten Vorrichtung notwendigen Verbindungsbohrungen mit unterschiedlichem Querschnitt zwischen Einlasskanal und Auslasskanal. Ferner folgt aus dieser Trennung von Einlasskanal und Auslasskanal, dass die Saugdüse an einem anderen Ort des Düsenkörpers angeordnet ist. Hierdurch können weitere Bohrungen eingespart werden. Insgesamt lässt sich durch die Trennung des Einlasskanals vom Auslasskanal und des damit einhergehenden Weglassens von Verbindungsbohrungen zwischen Einlasskanal und Auslasskanal ein signifikant weniger aufwendiger Düsenkörper herstellen.

Ein weiterer Vorteil der Trennung von Einlasskanal und Auslasskanal liegt darin, dass im Einlasskanal keine Verzweigung zum Auslasskanal vorhanden ist. Dadurch gelangt die gesamte zugeführte Druckluft durch den Einlasskanal in den Behälter, ohne dass über einen Abzweig ein Teil dieser Druckluft bereits wieder dem Auslasskanal zugeführt würde. Auf diese Weise kann sichergestellt werden, dass die Zufuhr von Druckluft zum Behälter weitestgehend konstant ist. Demgegenüber kann bei einer Aufteilung der Druckluft im Einlasskanalbereich gemäß EP 0 314 022 B1, d.h. mit einem Abzweig zum Auslasskanal je nach Klumpenbildung im Strahlmittel oder nach Füllgrad des Behälters mit Strahlmittel mal mehr oder mal weniger Druckluft über den Einlasskanal in den Behälter gelangen, da die Druckluft in ggf. schwankender Weise auch über die Verbindungsbohrungen zwischen Einlasskanal und Auslasskanal abgeführt wird. Das Strahlmittel kann daher bei einer erfindungsgemäßen Vorrichtung gleichmäßiger mit Luft vermischt werden, so dass man ein konstanteres Luft-Strahlmittel-Gemisch erhält.

Bei einer besonderen Ausführungsform durchdringt der Auslasskanal den Düsenkörper vollständig in dessen Längsrichtung, so dass sich eine gradlinige Längsbohrung durch den Düsenkörper ergibt, die vorzugsweise axial, insbesondere entlang der Mittelachse des Düsenkörpers verläuft. Dabei weist vorteilhafterweise der Auslasskanal einen dem Behälter zugewandten Eingang und einen dem Behälter abgewandten Ausgang auf und zwar derart, dass im Bereich des Eingangs der Bohrungsdurchmesser geringer ist als im Bereich des Ausgangs. Vorteilhafterweise umfasst die Saugdüse dabei eine von der Düsenkörperaußenseite radial zum Auslasskanal hinführende Bohrung, so dass mittels der genannten Maßnahmen im Bereich der Saugdüse ein Unterdruck gemäß dem Venturi-Prinzip gebildet wird, wenn Druckluft über den Einlasskanal in den Behälter und über den Ausgangskanal wieder aus dem Behälter herausgeführt wird. Aufgrund der Querschnittserweiterung im Auslasskanal wird nämlich ein Unterdruck in der die Saugdüse bildenden Bohrung erzeugt, die das aufgewirbelte Strahlmittel aus dem Behälter ansaugt.

Bei einer weiteren besonderen Ausführungsform weist der Einlasskanal eine den Düsenkörper umlaufende Nut, insbesondere Ringnut auf. Diese Nut lässt sich einfach herstellen, insbesondere durch Drehen oder Fräsen des Düsenkörpers. Ferner macht eine derartige umlaufende Nut eine Ausrichtung des Düsenkörpers am Behälter entbehrlich, da der Einlasskanal in jedweder Winkelstellung des Düsenkörpers im Behälter in gleicher Weise mit Druckluft versorgt werden kann.

Vorteilhafterweise weist dabei der Einlasskanal wenigstens eine in den Behälter gerichtete Wirbeldüse zum Verwirbeln des Strahlmittels auf, die mit der umlaufenden Nut in Verbindung steht. Auf diese Weise kann die zugeführte Druckluft einfach in den Behälter geführt werden. Hierbei umfasst die Wirbeldüse eine in Längsrichtung des Düsenkörpers verlaufende Bohrung.

Besonders bevorzugt wird der Düsenkörper (zumindest teilweise) durch Drehen hergestellt, d.h. einer spanenden und/oder schleifenden Bearbeitung auf einer Drehbank unterzogen. Der Düsenkörper ist auf diese Weise im wesentlichen rotationssymmetrisch ausgebildet, was im Hinblick auf den Einbau in den Behälter vorteilhaft ist, da eine weitgehende Rotationssymmetrie eine Ausrichtung des Düsenkörpers um seine Längsachse entbehrlich macht.

Besonders bevorzugt ist der Düsenkörper einschließlich der daran ausgebildeten Saugdüse und der daran ausgebildeten Wirbeldüse einstückig ausgebildet. Hierdurch können die Herstellungskosten weiter reduziert werden.

Besonders bevorzugt ist der Düsenkörper aus einem weichen Metall wie Messing oder Aluminium ausgebildet. Diese Materialien lassen sich leicht bearbeiten, weisen aber gleichwohl eine im Vergleich zu Kunststoffen hohe Widerstandsfähigkeit gegen die Beanspruchung durch das Luft-Strahlmittel-Gemisch auf.

Bei einer weiteren besonderen Ausführungsform ist der Düsenkörper zumindest teilweise aus Keramik, insbesondere Borkarbid, einem gehärteten Metall und/oder einem Hartmetall ausgebildet. Diese Materialien haben den Vorteil, dass sie widerstandsfähiger gegen das Strahlmittel sind und daher weniger durch das Strahlmittel abgeschliffen werden. Vorzugsweise ist daher der Düsenkörper im Bereich der Saugdüsen aus einem oder mehreren dieser Materialien ausgebildet.

Bei einer weiteren besonderen Ausführungsform ist der Eintrittspunkt der Bohrung der Wirbeldüse in den Düsenkörper und der Eintrittspunkt der Bohrung der Saugdüse in den Wirbelkörper in Bezug auf die Mittelachse des Düsenkörpers derart versetzt, dass diese beiden Eintrittspunkte einen Winkel einschließen. Hierdurch lässt sich die Verwirbelung des Strahlmittels im Behälter verbessern. Besonders bevorzugt ist dieser Winkel veränderbar, bspw. in dem am Düsenkörper Verstellmittel zum Verstellen dieses Winkels angeordnet sind.

Bei einer weiteren besonderen Ausführungsform ist an dem Düsenkörper ein Steigrohr angeordnet, das an den Eingang des Auslasskanals angeschlossen ist und sich bis in den oberen Bereich des Behälters erstreckt und dort eine Öffnung aufweist, wobei das Steigrohr einen inneren freien Querschnitt aufweist, der größer ist als der Querschnitt des Auslasskanals im Bereich (in Strömungsrichtung gesehen) oberhalb der Saugdüse. Diese Ausgestaltung führt zu einer Querschnittsverengung des Kanals, durch den die aus dem Behälter austretende Luft abgeführt wird und zwar oberhalb des Bereichs der Saugdüse. Hierdurch wird die Strömungsgeschwindigkeit im Bereich der Querschnittsverengung erhöht und somit kann mit einfachen Mitteln der Venturi-Effekt erreicht werden. Für die Querschnittsveränderung ist lediglich ein Rohr auf den Ventilkörper aufzusetzen, das einen größeren Querschnitt aufweist, als der Eintrittspunkt des Auslasskanals in den Ventilkörper. Zur Querschnittserweiterung ist dann lediglich noch eine zweite Bohrung mit größerem Querschnitt im Ventilkörper vorzusehen. Bei dieser Konstruktion sind daher lediglich drei Bohrungen unterschiedlichen Querschnitts erforderlich, um den Saugeffekt des Venturi-Prinzips zu realisieren, wobei die dritte Bohrung durch die Saugdüse selbst bedingt wird.

Besonders bevorzugt wird das Luft-Strahlmittel-Gemisch durch einen elastischen Schlauch abgeführt, an dem ein Absperrorgan angeordnet ist, mittels dessen der Schlauch absperrbar ist. Auf diese Weise lässt sich die Menge des abgegebenen Luft-Strahlmittel-Gemischs steuern, einschl. des Einschaltens und Ausschaltens des Bildens des Luft-Strahlmittel-Gemischs.

Besonders bevorzugt ist das Absperrorgan als steuerbarer Pneumatikzylinder ausgebildet. Der Pneumatikzylinder kann dann den elastischen Schlauch zudrücken, um auf diese Weise die Zufuhr von Druckluft zu dem Behälter zu unterbinden.

Weitere besondere Ausführungsformen ergeben sich aus den Unteransprüchen sowie aus den anhand der Zeichnung erläuterten Ausführungsbeispielen. In der Zeichnung zeigt:
- Fig. 1: eine Querschnittsansicht durch eine Vorrichtung zum Bilden eines Luft-Strahlmittel-Gemischs gemäß einem Ausführungsbeispiel der Erfindung mit einem Strahlmittel-Behälter und einem Düsenkörper und
- Fig. 2: die Vorrichtung gemäß Fig. 1 in einer um 90° versetzten Querschnittsansicht.

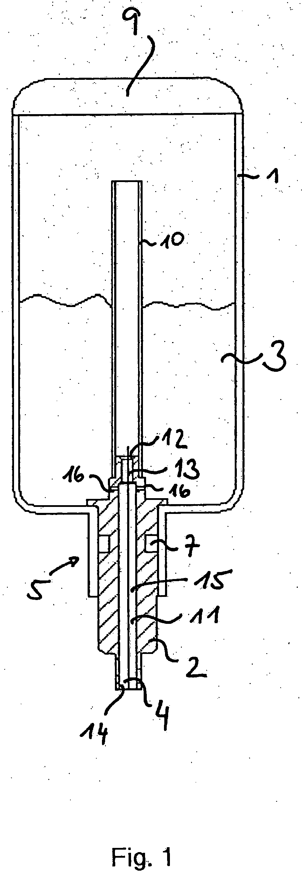

Fig. 1 zeigt einen an einem Behälter 1 angebrachten Düsenkörper 2 mittels dem ein Gemisch aus Druckluft und einem Strahlmittel 3 gebildet werden kann. Das gebildete Luft-Strahl-Gemisch 4 wird zur Bearbeitung von Gegenständen, bspw. im Bereich der Dentaltechnik, d.h. zur Bearbeitung von Kronen, Brücken, Inlets etc. verwendet. Das Strahlmittel kann bspw. Sand oder auch jedwedes andere Granulat sein. Mittels der gezeigten Anordnung soll ein möglichst konstantes Luft-Strahlmittel-Gemisch erhalten werden. Zu diesem Zweck wird in den Strahlmittelbehälter 1 der Körper 2 einer Axialmischdüse eingebracht, um das Strahlmittel 3 mit Luft zu vermischen.

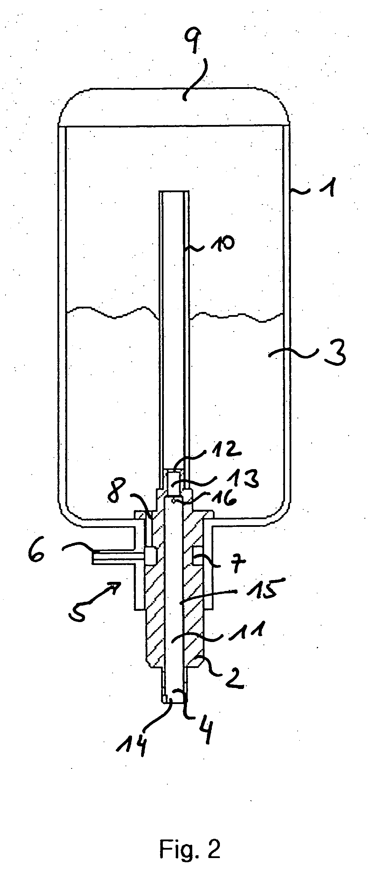

Wie in Fig. 2 gezeigt, weist ein am Behälter 1 angeformter Fortsatz 5 einen Speisedruckanschluss 6 auf, über den Druckluft zu einer am äußeren Umfang des Düsenkörpers 2 gebildeten Ringnut 7 geleitet wird. Diese Ringnut 7 umgibt den im wesentlichen rotationssymmetrisch ausgebildeten Düsenkörper 2 entlang seines gesamten oder entlang eines Teils seines Umfangs, der im übrigen einen zylindrischen äußeren Abschnitt aufweist, der von seinen Abmessungen an einen korrespondierenden zylindrischen inneren Abschnitt des Fortsatzes 5 angepasst ist. Von der Ringnut 7 erstreckt sich in Richtung des Behälterinnenraumes eine Bohrung 8, welcher eine Wirbeldüse bildet, die das Strahlmittel 3 unter Vermeidung von Klumpenbildung und/oder Verklebung in Bewegung versetzt. Das Strahlmittel 3 wird somit aufgewirbelt. Insbesondere feine Strahlmittel können bei längerer Lagerung durch ihr Eigengewicht verdichten und könnten dann ohne eine Verwirbelung nicht mehr angesaugt werden.

Die über den Speisedruckanschluss 6, die Ringnut 7 und die Wirbeldüse 8 in den Behälter 1 eingebrachte Druckluft steigt durch das Strahlmittel in Richtung eines am oberen Kopfbereich des Behälters angeordneten Behälterdeckels 9 und entweicht durch ein Steigrohr 10 und einen am Düsenkörper 2 gebildeten Auslasskanal 11 den Behälter 1. Im oberen Bereich des Düsenkörpers 2 befindet sich eine Eingangsöffnung 12 zum Auslasskanal 11, durch den eine Bohrung 13 mit einem ersten Querschnitt hindurchtritt. Am unteren Ende des Düsenkörpers 2 befindet sich eine Ausgangsöffnung 14 aus dem Auslasskanal 11 durch den eine Bohrung 15 hindurchtritt, die einen größeren Querschnitt aufweist als die genannte Bohrung 13. Beide Bohrungen 13 und 15 fluchten miteinander. Sie liegen insbesondere auf der Mittelachse des Düsenkörpers 2. Sie bilden außerdem den Auslasskanal 11.

Im Bereich der Eingangsöffnung 12 zum Auslasskanal 11 ist das Steigrohr 10 befestigt. Das Steigrohr 10 fluchtet ebenfalls mit den Bohrungen 13 und 15. Der innere Durchmesser des Steigrohrs 10 ist größer als der Durchmesser der Bohrung 13. Im Bereich des sich erweiternden Querschnitts und zwar am oberen Bereich der Bohrung 15 sind eine oder mehrere Saugdüsen 16 angeordnet, die radial durch den Düsenkörper 2 hindurchtreten und beispielsweise senkrecht auf dem Auslasskanal 11 stehen.

Durch die oben beschriebene Konstruktion ergibt sich eine sog. Venturi-Düse, durch die im Betrieb die durch die Bohrung 15 durchströmende Luft aufgewirbeltes Strahlmittel 3 aus dem Behälter ansaugt. Auf diese Weise entsteht in der Bohrung 15 ein Luft-Strahlmittel-Gemisch, was in Richtung des Ausgangs 14 aus dem Düsenkörper 2 ausgestoßen wird.

Vorstehend wurde die Verengung des Strömungskanals beim Übergang vom Steigrohr 10 in den Auslasskanal 11 durch eine Bohrung 13 mit geringerem Durchmesser gegenüber der Bohrung 15 und gegenüber dem Steigrohr 10 beschrieben. Es sind aber auch andere Mittel bei alternativen Ausführungsformen vorgesehen, mittels derer eine Querschnittsverengung erreicht werden kann, bspw. in Form einer Blende.

Die Saugdüsen 11 sind vorzugsweise um 90° versetzt zur Wirbeldüse 7 angeordnet. Es sind aber auch bei anderen Ausführungen andere Versatzwinkel möglich und sinnvoll und insbesondere abhängig von der Anzahl der Wirbeldüsen 8. In den Figuren 1 und 2 ist zwar lediglich eine Wirbeldüse 8 dargestellt. Es sind aber auch zwei oder mehr als zwei Wirbeldüsen bei alternativen Ausführungsformen vorgesehen.

Der vorstehend genannte Winkelversatz ist entweder für einen speziellen Düsenkörper 2 fest vorgegeben. Er kann aber auch variabel ausgestaltet sein, indem am Düsenkörper 2 Verstellmittel vorgesehen sind, mittels derer dieser Winkel veränderbar ist.

Am Ausgang 14 entsteht mittels der vorstehend beschriebenen Vorrichtung ein konstantes Luft-Strahl-Gemisch welches über einen elastischen Schlauch (nicht dargestellt) einem Strahlgriffel (nicht dargestellt) zugeführt wird, um einer Bedienperson das gezielte Richten des Strahls auf den zu bestrahlenden Gegenstand zu ermöglichen. Diesem Schlauch ist ein Absperrorgan zugeordnet, mittels dessen der Schlauch abgesperrt werden kann. Das Absperrorgan weist bei einem Ausführungsbeispiel einen steuerbaren Pneumatikzylinder auf, der bspw. durch einen Fußschalter bzw. ein Pedal von einer Bedienperson gesteuert werden kann, um das über den elastischen Schlauch zugeführte Luft-Strahlmittel-Gemisch zu steuern. Alternativ oder zusätzlich kann das Luft-Strahlmittel-Gemisch aber auch über eine Rohrleitung mit einem Absperrventil zum zu bestrahlenden Gegenstand geführt werden.

Dank der Erfindung ist ein besonders einfach herzustellender Düsenkörper vorgesehen, der nach dem Venturi-Prinzip arbeitet und nicht mehr als vier Bohrungen benötigt, zzgl. einer umlaufenden Nut. Die Herstellungskosten dieses derartigen Düsenkörpers sind gegenüber herkömmlichen Lösungen wesentlich geringer. Da ein derartiger Düsenkörper eine beschränkte Lebensdauer hat, und der Düsenkörper von Zeit zu Zeit auszutauschen ist, sind geringe Herstellungskosten von besonderem Vorteil.

## Patentansprüche

1. Vorrichtung zum Bilden eines Gemischs aus Druckluft und einem Strahlmittel (3) zur Bearbeitung von Oberflächen von Gegenständen, insbesondere der Dentaltechnik, durch Bestrahlen der Oberfläche mit dem Luft-Strahlmittel-Gemisch, wobei die Vorrichtung einen Behälter (1) für das Strahlmittel (3) und einen an diesem Behälter (1) angeordneten Düsenkörper (2) umfasst,
wobei der Düsenkörper (2) einen Einlasskanal (7, 8) zum Zuführen von Druckluft in den Behälter (1) und einen Auslasskanal (11) zum Abführen des Luft-Strahlmittel-Gemischs aus dem Behälter (1) aufweist,
wobei der Auslasskanal (11) in Strömungsrichtung eine Querschnittserweiterung und wenigstens eine im Bereich des sich erweiternden Querschnitts angeordnete Saugdüse (16) aufweist, welche einen Durchgang vom Behälter (1) zum Auslasskanal (11) bildet,
**dadurch gekennzeichnet, dass**
der Einlasskanal (7, 8) und der Auslasskanal (11) den Düsenkörper (2) voneinander getrennt durchlaufen.

2. Vorrichtung nach Anspruch 1,
**dadurch gekennzeichnet, dass**
der Auslasskanal (11) den Düsenkörper (2) in dessen Längsrichtung vollständig durchdringt.

3. Vorrichtung nach Anspruch 2,
**dadurch gekennzeichnet, dass**
der Auslasskanal (11) eine dem Düsenkörper (2) axial durchdringende Bohrung (13, 15) aufweist.

4. Vorrichtung nach einem der vorhergehenden Ansprüche,
**dadurch gekennzeichnet, dass**
der Auslasskanal (11) einen dem Behälter (1) zugewandten Eingang (12) und einen dem Behälter (1) abgewandten Ausgang (14) aufweist, wobei der Eingang (12) einen geringeren Bohrungsdurchmesser aufweist als der Ausgang (14).

5. Vorrichtung nach einem der vorhergehenden Ansprüche,
**dadurch gekennzeichnet, dass**
die Saugdüse (16) eine von der Düsenkörperaußenseite radial zum Auslasskanal (11) hinführende Bohrung (16) umfasst.

6. Vorrichtung nach einem der vorhergehenden Ansprüche,
**dadurch gekennzeichnet, dass** der Einlasskanal (7, 8) eine den Düsenkörper (2) umlaufende Nut (7), insbesondere Ringnut aufweist.

7. Vorrichtung nach einem der vorhergehenden Ansprüche,
**dadurch gekennzeichnet, dass**
der Einlasskanal (7, 8) wenigstens eine in den Behälter (1) gerichtete Wirbeldüse (8) zum Verwirbeln des Strahlmittels (3) umfasst, die mit der umlaufenden Nut (7) in Verbindung steht.

8. Vorrichtung nach einem der vorhergehenden Ansprüche,
**dadurch gekennzeichnet, dass**
die Wirbeldüse (8) eine in Längsrichtung des Düsenkörpers (2) verlaufende Bohrung umfasst.

9. Vorrichtung nach einem der vorhergehenden Ansprüche,
**dadurch gekennzeichnet, dass**
der Düsenkörper (2) zumindest teilweise durch Drehen hergestellt ist.

10. Vorrichtung nach einem der vorhergehenden Ansprüche,
**dadurch gekennzeichnet, dass**
der Düsenkörper (2), einschl. Saugdüse (16) und Wirbeldüse (8), einstückig ausgebildet ist.

11. Vorrichtung nach einem der vorhergehenden Ansprüche,
**dadurch gekennzeichnet, dass**
der Düsenkörper (2) aus Messing ausgebildet ist.

12. Vorrichtung nach einem der vorhergehenden Ansprüche,
**dadurch gekennzeichnet, dass**
der Düsenkörper (2) aus Aluminium ausgebildet ist.

13. Vorrichtung nach einem der vorhergehenden Ansprüche,
**dadurch gekennzeichnet, dass**
der Düsenkörper (2) zumindest teilweise aus Keramik, insbesondere Borkarbid, einem gehärteten Metall und/oder Hartmetall ausgebildet ist.

14. Vorrichtung nach einem der vorhergehenden Ansprüche,
**dadurch gekennzeichnet, dass**
i) der Eintrittspunkt der Bohrung (8) der Wirbeldüse in den Düsenkörper (2) und
ii) der Eintrittspunkt der Bohrung (16) der Saugdüse
in Bezug auf die Mittelachse des Düsenkörpers (2) einen Winkel einschließen.

15. Vorrichtung nach Anspruch 14,
**dadurch gekennzeichnet, dass**
der Winkel variabel ist.

16. Vorrichtung nach Anspruch 15,
**dadurch gekennzeichnet, dass**
an dem Düsenkörper (2) Verstellmittel zum Verstellen des Winkels angeordnet sind.

17. Vorrichtung nach einem der vorhergehenden Ansprüche,
**dadurch gekennzeichnet, dass**
an dem Düsenkörper (2) ein Steigrohr (10) angeordnet ist, das an den Eingang (12) des Auslasskanals (11) angeschlossen ist und sich bis in den oberen Bereich des Behälters (1) erstreckt und dort eine Öffnung aufweist, wobei das Steigrohr (10) einen inneren freien Querschnitt aufweist, der größer ist als der Querschnitt des Auslasskanals (11) im Bereich - in Strömungsrichtung gesehen - oberhalb der Saugdüse (16).

18. Vorrichtung nach einem der vorhergehenden Ansprüche,
**dadurch gekennzeichnet, dass**
das Luft-Strahlmittel-Gemisch durch einen elastischen Schlauch abgeführt wird, an dem ein Absperrorgan angeordnet ist, mittels dessen der Schlauch absperrbar ist.

19. Vorrichtung nach Anspruch 18,
**dadurch gekennzeichnet, dass**
das Absperrorgan einen steuerbarer Pneumatikzylinder umfasst.

20. Verfahren zum Bilden eines Gemischs aus Druckluft und einem Strahlmittel (3) zur Bearbeitung von Oberflächen von Gegenständen, insbesondere der Dentaltechnik, durch Bestrahlen der Oberfläche mit dem Luft-Strahlmittel-Gemisch, wobei das Verfahren die Schritte umfasst:
Zuführen von Druckluft in einen Behälter (1) für das Strahlmittel (3) durch einen Einlasskanal (7, 8) in einem an diesem Behälter (1) angeordneten Düsenkörper (2),
Abführen des Luft-Strahlmittel-Gemischs aus dem Behälter (1) aus einem Auslasskanal (11), und
Ansaugen von Strahlmittel durch wenigstens eine im Bereich eines sich erweiternden Querschnitts des Auslasskanals angeordnete Saugdüse (16), welche einen Durchgang vom Behälter (1) zum Auslasskanal (11) bildet,
**dadurch gekennzeichnet, dass**
die Luft durch den Einlasskanal (7, 8) und das Luft-Strahlmittel-Gemisch durch den Auslasskanal (11) den Düsenkörper (2) voneinander getrennt durchlaufen.

21. Verfahren nach dem vorhergehenden Anspruch,
**dadurch gekennzeichnet, dass** das Strahlmittels (3) mittels einer in den Behälter (1) gerichteten Wirbeldüse (8) des Einlasskanals (7, 8), die mit einer den Düsenkörper (2) umlaufenden Nut (7) des Einlasskanals in Verbindung steht, verwirbelt wird.

22. Verfahren zum Bestrahlen der Oberfläche von Gegenständen, insbesondere der Dentaltechnik, mit einem Luft-Strahlmittel-Gemisch,
**dadurch gekennzeichnet, dass** das Luft-Strahlmittel-Gemisch nach einem Verfahren nach einem der vorhergehenden Ansprüche 20-21 gebildet wird.
